# EUROPEAN PATENT APPLICATION

(11) **EP 1 617 421 A1**
(43) Date of publication of application: **18.01.2006**
(21) Application number: 04723027.1
(22) Date of filing: 24.03.2004
(51) Int. Cl.: G11B 7/0045, G11B 7/0055, G11B 7/007, G11B 20/12

(54) **OPTICAL DATA RECORDING METHOD AND OPTICAL DISC DRIVE**

(30) Priority: 21.04.2003 JP 2003115548
(71) Applicant: MATSUSHITA ELECTRIC INDUSTRIAL CO., LTD., Kadoma-shi, Osaka 571-8501 (JP)
(72) Inventor: SHOJI, Mamoru, Osaka 591-8032 (JP); ISHIDA, Takashi, Kyoto 614-8331 (JP)
(74) Representative: Grünecker, Kinkeldey, Stockmair & Schwanhäusser Anwaltssozietät
(86) International application number: PCT/JP2004/004096
(87) International publication number: WO 2004/095437

(57) **Abstract**

An optical data writing method according to the present invention is designed to write user data optically on an optical disk by dividing the user data into a number of blocks, each being made up of a plurality of sectors, and by adding an error correction code to each block. The method includes the steps of: writing a first set of data, including data representing a first content, on a track on the optical disk; and writing a second set of data, including data representing a second content, onto the track such that an unrecorded area, where no data is stored, is left between respective areas where the first and second sets of data have been written.

## Description

### TECHNICAL FIELD

The present invention relates to an optical data writing method for writing data on an optical disk by irradiating the optical disk with a laser beam and also relates to an optical disk drive.

### BACKGROUND ART

Recordable optical disks have been the object of much attention as media that can store a huge amount of data such as video data. And research and development has been carried on to increase the capacities of those recordable optical disks and store video of higher quality there for a longer time.

Those recordable optical disks are classifiable into disks on which data can be rewritten a number of times (which will be referred to herein as "rewritable optical disks") and disks on which data can be added but may be written only once (which will be referred to herein as "write-once optical disks").

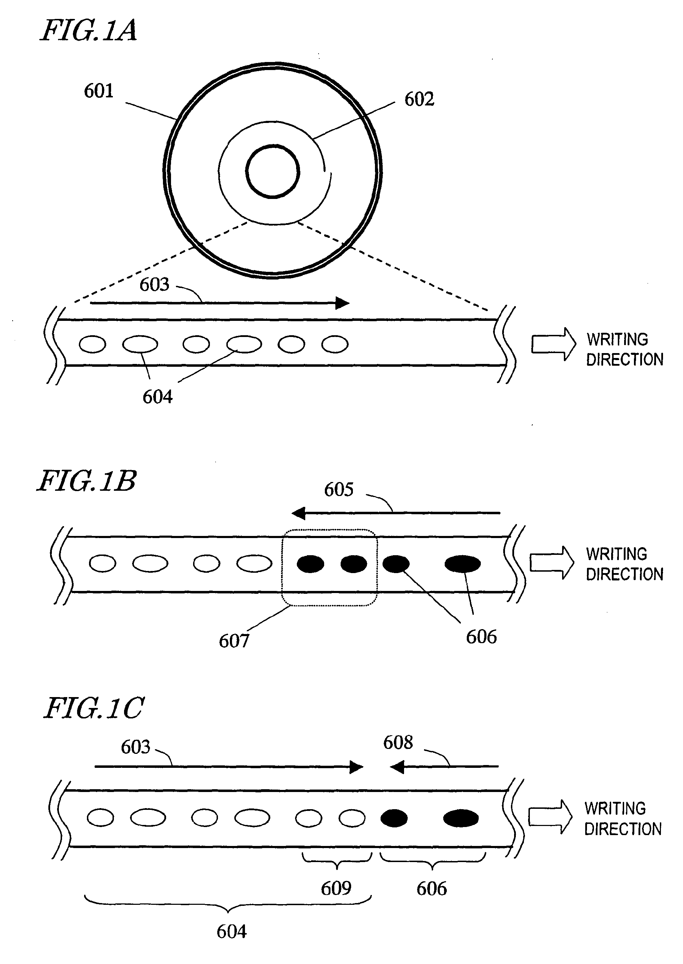

FIG. **1A** schematically illustrates the structure of a conventional write-once optical disk. The optical disk **601** includes a spiral track **602**, on which recording marks **604**, obtained by modulating data to be written, are made. For example, data representing a first content **603** to be recorded is modulated, thereby leaving recording marks **604** on the optical disk **601.**

If an unrecorded area is still left even after the first content **603** has been recorded, then data may be further written to the optical disk **601.** In writing such data, however, no unrecorded area should be left between the recording marks representing the first content **603** and recording marks representing the content to be further written in order to make the series of recording marks continuous on the track and to read the data stored properly. As used herein, the "unrecorded area" refers to an area in which no recording marks are present and which is even longer than the longest one of the marks and spaces obtained by modulating the data to be written.

According to a first conventional writing method, to prevent such an unrecorded area from being left between the recorded area and the additional storage area, the write operation is carried out such that the end of the recording marks **604** representing the first content **603** is overlapped by the beginning of the recording marks **606** representing a second content **605** as shown in FIG. **1B.** As can be seen from FIG. **1B**, the recording marks are superposed one upon the other and no marks in proper shapes can be left in the area **607.** For that reason, dummy data may be written on that area **607.**

On the other hand, according to a second conventional writing method, the two recording marks are made continuously so as to leave no unrecorded area between the end of the recording marks **604** representing the first content **603** and the beginning of the recording marks **606** representing the second content **605** as shown in FIG. **1C.**

According to the first method, however, the recording marks are written twice on the same area **607.** That is to say, since the area **607** is exposed to an excessive amount of laser beam, the track is likely to be damaged. As a result, when the written data is read out from such an optical disk, the focus servo and tracking servo often lose their stability. Particularly if the first and second contents have been written by using different recorders, then the damage done on the track may be significant due to the difference in writing conditions.

Meanwhile, according to the second method, one of the recording marks representing the second content is left adjacent to one of the recording marks representing the first content. Accordingly, in recording the second content, the end **609** of the recording marks **604** is subject to the heat generated when the recording marks **606** are made. As a result, the recording marks at the end **609** may be deformed or destroyed, which is a problem.

The higher the storage densities of optical disks, the narrower the track pitches and track widths. Then, such a problem will be even more likely to occur in the near future.

### DISCLOSURE OF INVENTION

In order to overcome at least one of the problems described above, an object of the present invention is to provide an optical data writing method and optical disk drive for performing a read operation with good stability even if a write-once operation has been performed.

An optical data writing method according to the present invention is designed to write user data optically on an optical disk by dividing the user data into a number of blocks, each being made up of a plurality of sectors, and by adding an error correction code to each block. The method includes the steps of: writing a first set of data, including data representing a first content, on a track on the optical disk; and writing a second set of data, including data representing a second content, onto the track such that an unrecorded area, where no data is stored, is left between respective areas where the first and second sets of data have been written.

In one preferred embodiment, the track on the optical disk includes no prepit areas defining addresses.

In another preferred embodiment, the unrecorded area is at least as long as one sector.

In another preferred embodiment, the end of the data representing the first content and/or the beginning of the data representing the second content includes dummy data.

In another preferred embodiment, the first set of data includes dummy data after the data representing the first content.

In another preferred embodiment, the second set of data includes dummy data before the data representing the second content.

In another preferred embodiment, a gap as long as one block is provided between the respective areas in which the data representing the first content and the data representing the second content have been written.

In another preferred embodiment, each of the first and second sets of data is divided into a plurality of sectors, which are spaced apart from each other by linking areas of the same length, and a gap as long as one linking area is provided between the respective areas where the data representing the first content and the data representing the second content have been written.

In another preferred embodiment, the dummy data defines a phase-locking pattern.

In another preferred embodiment, the first or second set of data is written by irradiating the unrecorded area with light having erasing power.

A computer-readable storage medium according to the present invention has stored thereon a program that is defined so as to make a computer execute respective processing steps of one of the optical data writing methods described above.

An optical disk drive according to the present invention is designed to write user data optically on an optical disk by dividing the user data into a number of blocks, each being made up of a plurality of sectors, and by adding an error correction code to each block. The drive includes: a motor for rotating and driving the optical disk; an optical head for irradiating the optical disk with a light beam to write data thereon; a servo control section for controlling the rotational velocity of the motor and a spot made by the light beam; and a light beam control section for controlling the intensity of the light beam. The servo control section and the light beam control section control the optical disk and the light beam so as to write a first set of data, including data representing a first content, on a track on the optical disk and then write a second set of data, including data representing a second content, onto the track such that an unrecorded area, where no data is stored, is left between respective areas where the first and second sets of data have been written.

In one preferred embodiment, the track on the optical disk includes no prepit areas defining addresses.

In another preferred embodiment, the unrecorded area is at least as long as one sector.

An optical disk according to the present invention is a disk, on a track of which user data has been written optically by dividing the user data into a number of blocks, each being made up of a plurality of sectors, and by adding an error correction code to each block. An unrecorded area, where no data has been written yet, is formed between an area where a first set of data, including data representing a first content, is stored and an area where a second set of data, including data representing a second content, is written.

In one preferred embodiment, the track includes no prepit areas defining addresses.

In another preferred embodiment, the unrecorded area is at least as long as one sector.

### BRIEF DESCRIPTION OF DRAWINGS

FIGS. **1A**, **1B** and **1C** schematically illustrate a conventional method to add data onto an optical disk.
FIG. **2** is a block diagram illustrating a preferred embodiment of an optical disk drive according to the present invention.
FIGS. **3A** and **3B** schematically illustrate a first preferred embodiment of a writing method according to the present invention.
FIG. **4** schematically shows a structure of data to be written on an optical disk.
FIG. **5** schematically shows another structure of data to be written on an optical disk.
FIG. **6** schematically shows still another structure of data to be written on an optical disk.
FIGS. **7A** and **7B** schematically illustrate the first preferred embodiment of the writing method of the present invention.

### BEST MODE FOR CARRYING OUT THE INVENTION

### EMBODIMENT 1

Hereinafter, a first preferred embodiment of an optical disk drive and optical data writing method according to the present invention will be described. The present invention is applicable to an optical disk drive and optical data writing method for making a recording mark by irradiating an optical disk, including a storage layer, with an infrared ray, visible radiation, an ultraviolet ray or light with any of various wavelengths (which may fall within the range of 635 nm to 830 nm or may be 405 nm) and by changing the reflectance of the irradiated portion.

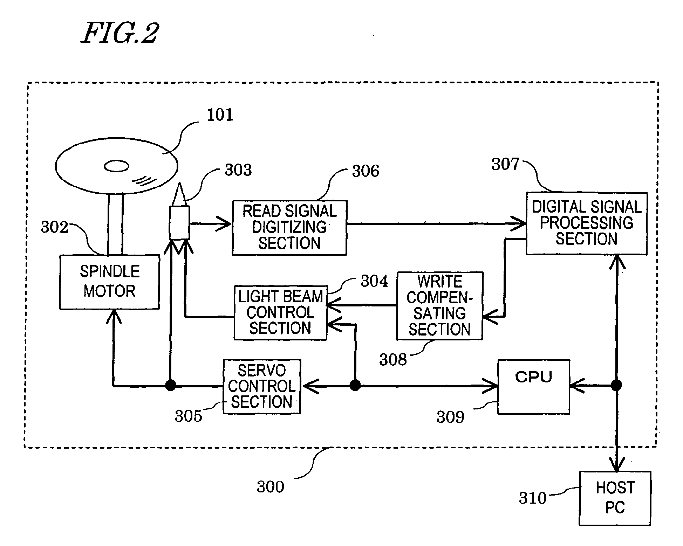

FIG. **2** is a block diagram illustrating a configuration for an optical disk drive **300** according to this preferred embodiment. The optical disk drive **300** includes a spindle motor **302**, an optical head **303**, a light beam control section **304**, a servo control section **305**, a read signal digitizing section **306**, a digital signal processing section **307**, a write compensating section **308** and a CPU **309.**

The spindle motor **302** rotates and drives an optical disk **101** at a predetermined rotational velocity under the control of the servo control section **305.**

The servo control section **305** controls the tracking control and focus control operations such that the light beam emitted from the optical head **303** follows the track on the optical disk **101** and maintains a predetermined converging state on the track.

In performing a read operation, the optical head **303** irradiates the optical disk **101** with a light beam and converts the light reflected from the optical disk **101** into an electrical signal, thereby outputting it as a read signal. The read signal digitizing section **306** amplifies and digitizes the read signal supplied from the optical head **303**, thereby generating a digital signal. Also, by using a built-in PLL (not shown), the read signal digitizing section **306** generates a clock signal synchronized with the digital signal.

The digital signal processing section **307** processes the digital signal. If address information is included in the digital signal, then the digital signal processing section **307** subjects the digital signal to a predetermined demodulation process, thereby extracting an address from it. On the other hand, if user data is included in the digital signal, then the digital signal processing section **307** subjects the digital signal to a predetermined demodulation process and error correction process, thereby generating read data. The address information and read data thus obtained are output to a host PC **310.**

In writing data on the optical disk **101**, the digital signal processing section **307** receives the data to be written from the host PC **310.** Also, the digital signal processing section **307** adds an error correction code to the write data received and subjects it to a predetermined modulation process, thereby generating modulated data.

The modulated data generated is converted by the write compensating section **308** into optically modulated data consisting of pulse trains. The write compensating section **308** also finely adjusts the pulse widths of the optically modulated data, thereby converting it into a write pulse signal, which contributes to making a recording mark easily.

The light beam control section **304** controls the optical head **303** such that a light beam corresponding to the write pulse signal is output in accordance with the instruction of the CPU **309.** In this case, the CPU **309** instructs the servo control section **305** to control the spot of the light beam that has been emitted from the optical head **303** and the rotational velocity of the optical disk such that the light beam is incident on a predetermined location on the optical disk.

The host PC **310** includes a computer (not shown), an application program (not shown) and an operating system (not shown) and instructs the optical disk drive **300** to perform a read or write operation.

If a first set of data, including data representing a first content, has been written on a track on an optical disk and if a second set of data, including data representing a second content, is further written onto that track, the optical disk drive **300** writes the second set of data such that an unrecorded area is left between the respective areas where the first and second sets of data have been written. Hereinafter, the optical data writing method performed by this optical disk drive **300** will be described in detail.

FIG. **3A** schematically illustrates the structure of the optical disk **101** on which a first content **103** has been written. The optical disk **101** includes a spiral track **102** on which recording marks, representing data to be written, are made. The optical disk **101** is a write-once disk. As used herein, the "write-once disk" refers to a disk that allows the user to write data only once on an unrecorded area. However, as long as the unrecorded area is still left, the operation of writing data onto that unrecorded area may be performed in multiple stages. That is to say, the data does not have to be written on the entire disk at a time.

On the track **102**, recording marks **104**, representing data representing the first content **103**, have already been left. Also, an unrecorded area **108** where no recording marks have been made yet is still left on the track **102** and extends from the last one of the recording marks **104** in the writing direction. Since data is written on a track by making those recording marks on the track, "to make a recording mark" will be regarded herein as synonymous with "to write data".

An information storage management area **110** is provided as the innermost area on the optical disk **101.** The information management area **110** includes a power calibration area for calibrating the laser power during a write operation and a storage management area for managing the storage area.

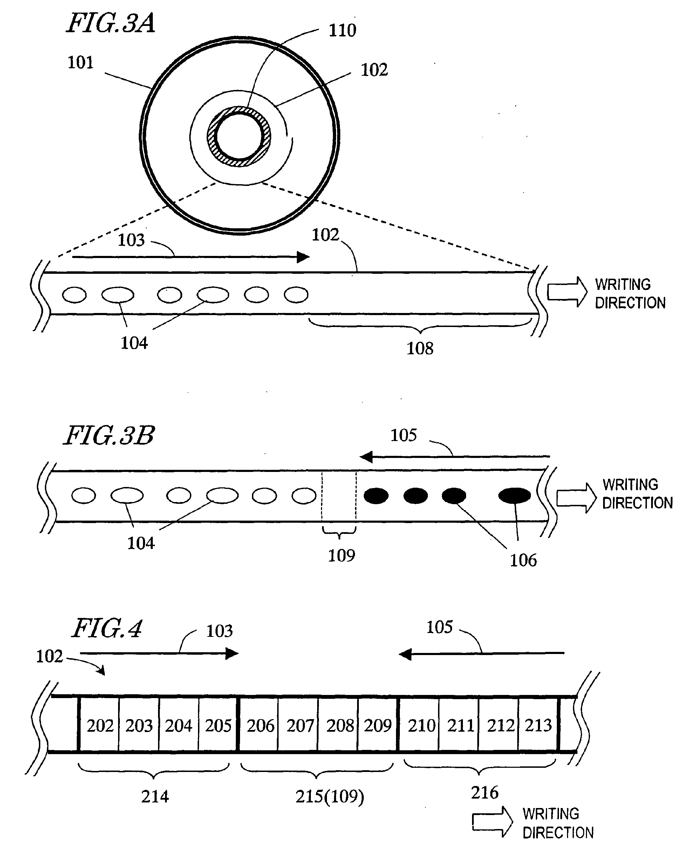

In writing the second content **105** onto the optical disk **101** in such a state, an unrecorded area **109** on which no recording marks **109** have been made yet is provided between the last one of the recording marks **104** representing the first content **103** and the beginning of the second content **105** as shown in FIG. **3B.** It should be noted that FIG. **3B** schematically illustrates the structure of the track and does not show the recording marks and unrecorded area **109** in accordance with their actual size relationship.

By providing the unrecorded area **109** in this manner, the recording marks **104** representing the first content **103** and the recording marks **106** representing the second content **105** never overlap with each other. Thus, it is possible to avoid the unwanted situation where the track is deformed due to the exposure to an excessive amount of radiation. Consequently, the servo operation never loses stability at the boundary portion and the read/write operations can always be performed with good stability.

However, the recording marks **104** are preferably made continuously within the area in which the data representing the first content **103** should be stored, and the recording marks **106** are preferably made continuously within the area in which the data representing the second content **105** should be stored. In that case, the unrecorded area will indicate the linking portion between the contents, and the gap between the contents can be detected quickly when data is read out from the optical disk **101.**

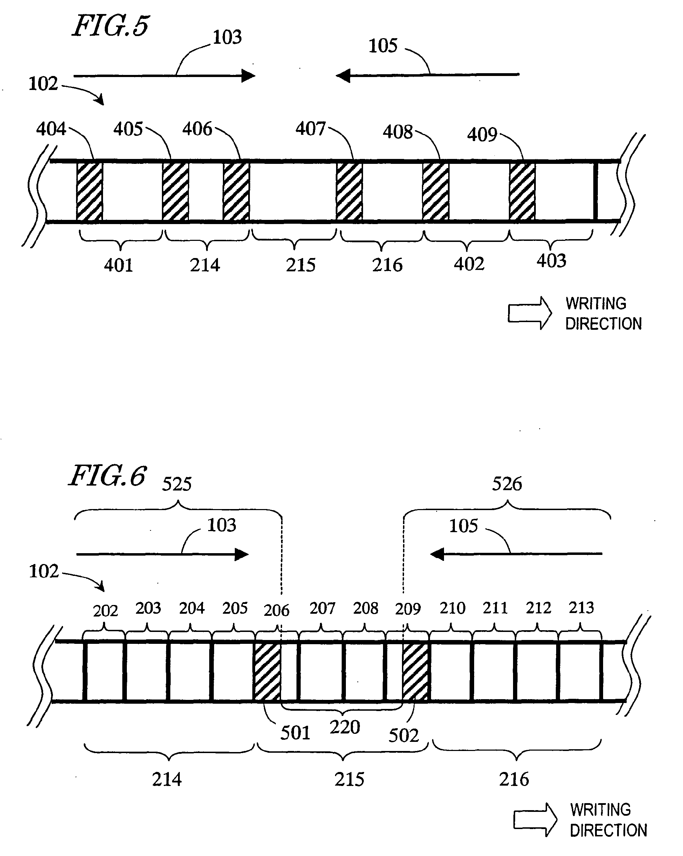

FIG. **4** schematically shows the structures of the first content **103**, second content **105** and unrecorded area **215** to be stored on the track **102** on the optical disk **101.** Data is written on the track **102** on a sector-by-sector basis and error correction process is performed on each block consisting of a plurality of sectors. Address information representing a relative position on the track **102** is also given on a block-by-block basis.

The address information may be either defined as data by the recording marks or superposed on the track wobble. However, the sectors preferably include no header areas in which the address is defined in advance by prepits as in a DVD-RAM, for example. Since no data may usually be written on such a header area, the respective sectors will be substantially separated by those header areas. Thus, even if no such unrecorded areas are provided, no problems due to the deformation of the tracks or recording marks will arise.

The first content **103** ends with a block **214** including sectors **202** to **205**, while the second content **105** begins with a block **216** including sectors **210** to **213.** The unrecorded area **109** is preferably provided on a block basis and may include one block **215**, for example. This block **215** includes sectors **206** to **209.** Since no recording marks are made on the block **215,** it is actually impossible to distinguish the sectors **206** to **209.** However, an area, which is long enough to store data corresponding to the sectors **206** to **209**, is secured along the track **102.**

Hereinafter, it will be described with reference to FIGS. **2** and **4** how the optical disk drive **300** performs read and write operations. A program or firmware that makes the CPU **309** control the respective components of the optical disk drive **300** in the procedure to be described below may be stored in a computer-readable storage medium such as an EEPROM, a ROM, a RAM, a hard disk or a magnetic recording medium (none of which is shown).

First, recording marks representing the first content are made on the track **102** on the optical disk **101** by a conventional method. While the first content is being written, the laser power is calibrated in the information management area **110.** After the first content has been written, information about the first content (e.g., the end address thereof) may be stored in the information management area **110.**

Next, the second content is written on the optical disk **101.** The optical disk drive **300** that writes the second content may or may not be the same as the optical disk drive **300** that has written the first content.

When the host PC **310** requests the CPU **309** to write the second content, the servo control section **305** moves the optical head **303** to around a sector having the address requested. In this case, if the optical disk drive that has written the first content is different from the optical disk drive that is going to write the second content, then the laser power is calibrated in the information management area 110 before the second content is written.

Meanwhile, the digital signal processing section **307** modulates the second content and the write compensating section **308** finely adjusts the widths and positions of the pulse signal that has been modulated so as to make appropriate recording marks. To write the second content, the location where the write operation should be started needs to be detected accurately. For that purpose, the optical disk **101** is irradiated with the light and the optical head **303** and read signal digitizing section **306** acquires the address of the area where the first content has been written by using the digital signal obtained from the reflected light. More specifically, the address reading process is started and the sectors **202**, **203**, **204** and **205** are read, thereby detecting the block address by the wobble information. As a result, the last block **214** in which the first content **103** has been written can be located.

The CPU **309** reads the address of the block **215** and starts writing data on the block **216** from the sector **210** such that the block **215** to be the unrecorded area **109** is left unrecorded after the last block of the first content **103** and that recording marks representing the second content **105** start being made on the block **216** that follows the block **215.**

In this case, the light beam output from the optical head **303** is controlled by the light beam control section **304** to a predetermined power value that has been instructed by the CPU **309.** Also, by changing the radiation power of the light beam in accordance with the data generated by the write compensating section **308**, the optical characteristic of the material of the storage layer is changed, thereby making predetermined recording marks on the track **102.** After data has been written on the sector **210**, predetermined data is sequentially written on the sectors **211**, **212** and **213** to finish writing the second content **105.** When the second content **105** has been written, information about the address of the second content **105** may be written on the information management area.

In reading the optical disk **101**, the optical disk drive **300** irradiates the optical disk **101** with a light beam and makes the optical head **303** generate a read signal from the light that has been reflected from the optical disk **101** as in reading a normal read-only optical disk. The read signal thus obtained is amplified and digitized by the read signal digitizing section **306**, thereby generating a digital signal. In the meantime, a clock signal synchronized with the digital signal is generated by the internal PLL (not shown).

The digital signal obtained in this manner has a no-data portion, corresponding to the unrecorded area **109** of the optical disk **101**, between the data representing the first content and the data representing the second content. For that reason, if this optical disk were read by the same signal processing as in reading a normal read-only optical disk, then the unrecorded area might be sensed as a lead-out area by mistake and the read operation might end without reading the data representing the second content at all.

To avoid such an error, the optical disk drive **300** maintains a phase-locked state by using the clock signal, generated by the PLL, during the interval after the first content has been read through and before the data representing the second content is retrieved. If normal data is temporarily unavailable due to deposition of dust on an optical disk, for example, an optical disk drive usually has the function of retaining the previous data until the normal data becomes available. Accordingly, by modifying such a function so that the previous data is retained and the digital signal is kept synchronized during the interval corresponding to the unrecorded area, the optical disk of the present invention can be read appropriately.

In this preferred embodiment, a phase-locking pattern may be provided at the beginning of a block representing the content. By recording the phase-locking pattern, the PLL can accomplish phase locking quickly and the read operation can be performed with good stability even if there is an unrecorded area.

Specifically, as shown in FIG. **5**, phase-locking patterns **404**, **405**, **407**, **408** and **409** may be provided at the respective tops of blocks **401** and **214**, representing a portion of the first content **103**, and blocks **216**, **204** and **403** representing a portion of the second content **105.** The phase-locking patterns may be provided as an alternation of **4T** marks and **4T** spaces, an alternation of **3T** marks and **3T** spaces, an alternation of **2T** marks and **2T** spaces, or an alternation of **5T** marks and **5T** spaces, for example.

By providing such phase-locking patterns, the optical disk drive **300** can retain the previous data during the interval corresponding to the unrecorded area **215** after having read data from the block **214** of the first content **103.** And in reading data from the block **216** of the second content **105**, the optical disk drive **300** can synchronize the digital signal, generated by processing the data of the second content **105**, quickly since the phase-locking pattern **216** is provided at the top of the block **216.**

Also, the phase-locking patterns **404**, **405**, **408** and **409** provided for the blocks **401**, **214**, **402** and **403**, respectively, can contribute to recovering the stability of the phase-locked loop quickly even if the PLL has lost some of the stability due to a scratch on the track **102**, for example.

In addition, another phase-locking pattern **406** may be provided at the end of the last block **214** of the first content **103.** In that case, the phase-locking patterns **406** and **407** are arranged before and after the block **215** representing the unrecorded area. As a result, in the digital signal, no-signal portion corresponding to the block **215** is interposed between two phase-locking signal components, thus further increasing the stability of the digital signal.

It should be noted that the phase-locking patterns **404**, **405**, etc. provided at the top of the blocks, the pattern **406** provided at the end of the first content, and the phase-locking pattern **407** provided at the beginning of the content may have mutually different lengths. Among other things, the phase-locking pattern **407** provided at the beginning of the second content **105** is preferably longer than the phase-locking patterns of the other blocks because the pattern **407** is preceded by the unrecorded area.

Furthermore, the pattern provided at the end of the first content **103** does not have to be a phase-locking pattern. The optical disk drive can also sense the end of the first content if the pattern provided at the end of the second content **103** is different from the other patterns.

The optical disk described above includes an unrecorded area that is as long as one block. However, the unrecorded area may be shorter than one block. As shown in FIG. **6,** the block **215,** sandwiched between the last block **214** of the first content **103** and the first block **216** of the second content **105,** includes an unrecorded area **220** and dummy data areas **501** and **502** on which recording marks, representing arbitrary dummy data, have been written. As used herein, the "dummy data" is data other than user data and address data. The dummy data area **501** is adjacent to the last block **214** of the first content **103,** while the dummy data area **502** is adjacent to the first block **215** of the second content **105.**

In order to prevent making of the recording marks in the dummy data areas **501** and **502** from affecting the recording marks that form the first and second contents **103** and **105,** the recording marks are preferably written in the dummy data area **501** right after the first content **103** has been written fully. Also, the recording marks are preferably left in the dummy area **502** just before the second content **105** starts to be written.

That is to say, a first set of data **525,** including the data representing the first content **103** and the dummy data to be written onto the dummy data area **501,** is written onto the track **102** at a time. Next, a second set of data **526,** including the dummy data to be written onto the dummy data area 502 and the data representing the second content 105, is written onto the track **102** at a time such that the unrecorded area **220** is left between the respective areas where the first and second sets of data have been written. As a result, it is possible to prevent the dummy data areas **501** and **502** from affecting the recording marks that form the first and second contents **103** and **105** or the overwritten recording marks from deforming the track shape.

The dummy data area **501** may form either all or just a part of the sector **206.** Likewise, the dummy data area **502** may form either all or just a part of the sector **209.** Also, if an unrecorded area that is at least as long as one sector is left, each dummy area may be equal to or longer than two sectors. Furthermore, unless the recording end point of the dummy area **501** overlaps with the recording start point of the dummy area **502,** the unrecorded area **220** may even be shorter than one sector.

The dummy data areas **501** and **502** are included in the same block **215.** However, data for the dummy data area **501** and data for the dummy data area **502** are written at mutually different times. That is why in writing data on the dummy data area **502,** first, the data is preferably read from the dummy data area **501** and then an error correction code is preferably added to the data that has been written on the dummy data area **501** and to the data that is going to be written on the dummy data area **502.**

By providing the dummy data areas **501** and **502,** the unrecorded area **220** between the two contents can be shortened and the PLL can keep operating with even more stability. A phase-locking pattern may be used as the dummy data. To stabilize the operation of the PLL, the dummy data area **501** is preferably longer than the dummy data area 502 that is adjacent to the second content **105.**

In the preferred embodiment described above, an unrecorded area is provided between two contents. However, if no marks are recorded in the unrecorded area, the write operation may be performed with higher power than that used for a read operation. For example, the write operation may be performed with erasing power.

### EMBODIMENT 2

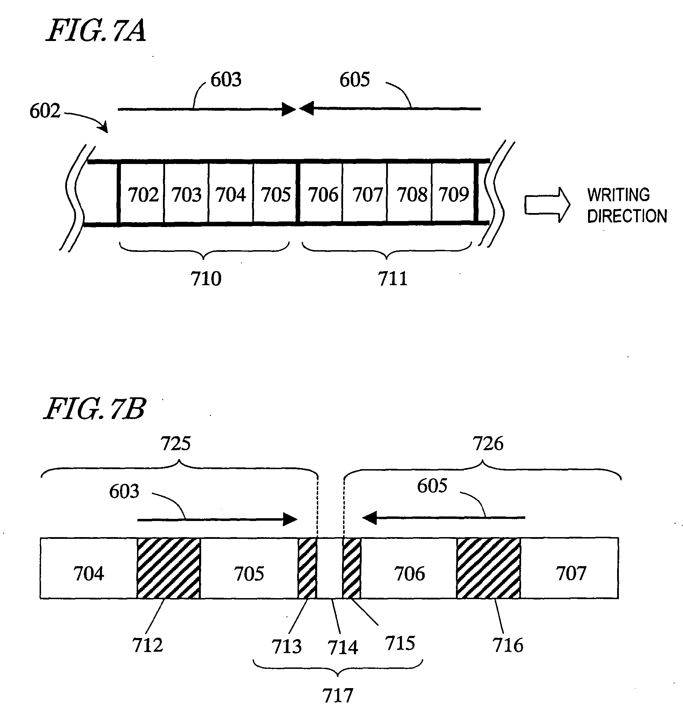

Hereinafter, a second preferred embodiment of the present invention will be described. FIGS. **7A** and **7B** schematically illustrate the structure of an optical disk on which a first content **603** and a second content **605** are stored. As in the first preferred embodiment described above, this optical disk is also a write-once disk and has a spiral track **602** on which recording marks, representing data to be stored, are made. An information management area is provided in an inside portion of the optical disk.

Each of the first and second contents **603** and **605** consists of a plurality of blocks, each of which includes a plurality of sectors. Linking areas of the same length are provided between those sectors.

For example, the first content **603** includes sectors **702** to **705** and the second content **605** includes sectors **706** to **709.** A linking area **712** is provided between the sectors **704** and **705** and a linking area **716** is provided between the blocks **706** and **707.**

A linking area **717** is provided between the last block **710** of the first content **603** and the first block **711** of the second content **605,** i.e., between the sectors **705** and **706.**

A predetermined signal has been written on the linking areas included in the first and second contents **603** and **605.** For example, a phase-locking signal may have been written there. On the other hand, the linking area **717** between the first and second contents **603** and **605** includes dummy data areas **713** and **715** in which predetermined dummy data is stored and an unrecorded area **714** interposed between the dummy data areas **713** and **715.**

The dummy data area **713** is adjacent to the sector **705** of the first content **603,** while the dummy data area **715** is adjacent to the sector **706** of the second content **605.** In the dummy data areas **713** and **715,** data that can be easily detected and can be clearly distinguished from the user data (e.g., an iterative pattern with a single frequency, an iterative pattern with a unique period, or a pattern that is not used for writing user data) is preferably stored. By storing such easily detectable data in the dummy data areas **713** and **715,** the boundary between the first and second contents **603** and **605** can be located easily.

By providing the unrecorded area **714** in this manner, the recording marks representing the first content **603** and the recording marks representing the second content **605** never overlap with each other. Thus, it is possible to avoid the unwanted situation where the track is deformed due to the exposure to an excessive amount of radiation. Consequently, the servo operation never loses stability at the boundary portion and the read/write operations can always be performed with good stability.

The data stored in the dummy data area **715** may be a phase-locking pattern. In that case, when a signal representing the second content is read, the PLL can accomplish phase locking by using the phase-locking pattern. As a result, the second content can be read with good stability.

Also, the signal written on the dummy data area **713** may be different from that written on the dummy data area **715.** Then, the boundary between the first and second contents **603** and **605** can be located. Furthermore, by detecting both the dummy data areas **713** and **715** and the unrecorded area, the temporary absence of signals due to dust deposited on the optical disk, for example, and the unrecorded area in the boundary between the two contents can be distinguished from each other.

Optionally, the length of the signal written on the dummy data area **713** may be different from that of the signal written on the dummy data area **715.** In that case, even if the same signal as that stored in the dummy data area **713** or **715** is included in the user data, the boundary between the two contents can still be detected by the difference between the lengths of signals that have been written on the dummy data areas **713** and **715.**

If a phase-locking pattern is included in the data stored in the dummy data area **715,** then the signal written on the dummy data area **715** is preferably longer than that written on the dummy data area **713.** In that case, when a signal representing the second content is read, the PLL can accomplish phase locking by using the phase-locking pattern. As a result, the second content can be read with good stability.

The writing method of this preferred embodiment may be carried out by using the optical disk drive **300** that has already been described for the first preferred embodiment. Hereinafter, it will be described with reference to FIGS. **2, 7A** and **7B** how the optical disk drive **300** performs read and write operations.

First, a first set of data **725,** including the data representing the first content **603** and the dummy data to be stored in the dummy data area **713,** is written on the track **602** on the optical disk. More specifically, the data representing the first content **603** is written first, and the data for the dummy data area **603** is written immediately. In the meantime, the laser power is calibrated in the information management area to start the write operation. After the first content **603** has been written, information including the end address of the first content may be written on the information management area.

Next, a second set of data **726,** including the dummy data to be stored in the dummy data area **715** and the data representing the second content **605,** is written on the same track **602** on the optical disk. When the host PC **310** requests the CPU **309** to write the second set of data, the servo control section **305** moves the optical head **303** to around a sector having the address requested. In this case, if the optical disk drive that has written the first content **603** is different from the optical disk drive that is going to write the second content **605,** then the laser power is calibrated in the information management area **110** before the second content is written.

Meanwhile, the digital signal processing section **307** modulates the second set of data and the write compensating section **308** finely adjusts the widths and positions of the pulse signal that has been modulated so as to make appropriate recording marks. To write the second set of data including the second content **605,** the location where the write operation should be started needs to be detected accurately. For that purpose, the optical disk is irradiated with light and the optical head **303** and read signal digitizing section **306** acquire the address of the area where the first content **603** and the dummy data have been written by using the digital signal obtained from the reflected light. More specifically, the address reading process is started and the sectors **702, 703, 704** and **705** are read, thereby detecting the block address by the wobble information. As a result, the last block **710** in which the first content **603** has been written can be located.

The CPU **309** leaves the unrecorded area **714** unrecorded after the dummy data area **713,** which was provided when the first content **603** was written, makes recording marks in the dummy data area **715** in the linking area **717,** and then starts to write data on the sector **706** and so on.

In this case, the light beam output from the optical head **303** is controlled by the light beam control section **304** to a predetermined power value that has been instructed by the CPU **309.** Also, by changing the radiation power of the light beam in accordance with the data generated by the write compensating section **308,** the optical characteristic of the material of the storage layer is changed, thereby making predetermined recording marks on the track **602.** After data has been written on the sector **706,** the linking area **716** is defined and then predetermined data is sequentially written on the sector **707,** linking area **716,** sector **707** and so on to finish writing the second content **105.** When the second content **105** has been written, information about the address of the second content **105** may be written on the information management area.

In reading the optical disk **101,** the optical disk drive **300** irradiates the optical disk **101** with a light beam and makes the optical head **303** generate a read signal from the light that has been reflected from the optical disk **101** as in reading a normal read-only optical disk. The read signal thus obtained is amplified and digitized by the read signal digitizing section **306,** thereby generating a digital signal. In the meantime, a clock signal synchronized with the digital signal is generated by the internal PLL (not shown). The digital signal obtained in this manner has a no-data portion, corresponding to the unrecorded area **109** of the optical disk **101,** between the data representing the first content and the data representing the second content. For that reason, if this optical disk were read by the same signal processing as in reading a normal read-only optical disk, then the unrecorded area might be sensed as a lead-out area by mistake and the read operation might end without reading the data representing the second content at all.

To avoid such an error, the optical disk drive **300** maintains a phase-locked state by using the clock signal, generated by the PLL, during the interval after the first content has been read through and before the data representing the second content is retrieved as in the first preferred embodiment described above. If the dummy data stored in the dummy data areas **713** and **715** is a phase-locking pattern, then the no-signal portion corresponding to the unrecorded area **714** is sandwiched between two phase-locking signals. As a result, the read operation can be performed with more stability.

According to the preferred embodiments described above, an unrecorded area is provided between a series of two contents, thereby avoiding an unwanted situation where recording marks, representing the content that has already been written, or the track is deformed due to the heat generated while recording marks representing the content to be added are being made. Consequently, the written data can be read with good stability.

In particular, even when the two contents are written by two different drives, it is also possible to prevent the problem that the track is deformed due to the application of significantly excessive heat as the recording marks are overwritten one upon the other.

The writing method of this preferred embodiment is applicable particularly effectively to a write-once optical disk on which no data is supposed to be written on the same area again or every previous data is supposed to be destroyed whenever any data is written there for the second time. According to this writing method, no data is written on the same area again. That is why the writing conditions can be set without being limited by the conditions for write-once operation. As a result, the storage layer of an optical disk can be designed much more freely. Also, when an optical disk is disposed of, data may be overwritten there intentionally such that the servo operation will lose its stability and that no data can be read out anymore. In this manner, the optical disk can be thrown away with confidentiality maintained.

Also, no blocks but the first or last one of a content are adjacent to the unrecorded area. Thus, the gap between the contents can be detected easily.

Furthermore, as user data may be written on a block including the unrecorded area, the storage area can be used more effectively.

Besides, when dummy data is stored on a block including the unrecorded area, the length of the unrecorded area can be shortened and the PLL can operate with more stability. What is more, if the dummy data is a phase-locking pattern, then the PLL can operate with even more stability.

In the preferred embodiments described above, the unrecorded area is supposed to be provided between two continuous contents. However, the unrecorded area does not have to be provided between two contents. Similar effects are achieved even if the unrecorded area is provided in the boundary between two sets of data that were written by two different recorders or in the boundary between two sets of data that were written by the same drive on different occasions.

### INDUSTRIAL APPLICABILITY

The present invention can be used effectively in an optical disk drive that performs a write operation using light sources with various wavelengths, and is particularly effectively applicable to an optical disk drive that can write data on a write-once optical disk.

## Claims

1. An optical data writing method for writing user data optically on an optical disk by dividing the user data into a number of blocks, each being made up of a plurality of sectors, and adding an error correction code to each said block, the method comprising the steps of:
writing a first set of data, including data representing a first content, on a track on the optical disk; and
writing a second set of data, including data representing a second content, onto the track such that an unrecorded area, where no data is stored, is left between respective areas where the first and second sets of data have been written.

2. The optical data writing method of claim 1, wherein the track on the optical disk includes no prepit areas defining addresses.

3. The optical data writing method of claim 1 or 2, wherein the unrecorded area is at least as long as one sector.

4. The optical data writing method of one of claims 1 to 3, wherein the end of the data representing the first content and/or the beginning of the data representing the second content includes dummy data.

5. The optical data writing method of one of claims 1 to 3, wherein the first set of data includes dummy data after the data representing the first content.

6. The optical data writing method of one of claims 1 to 3, wherein the second set of data includes dummy data before the data representing the second content.

7. The optical data writing method of claim 5 or 6, wherein a gap as long as one block is provided between the respective areas in which the data representing the first content and the data representing the second content have been written.

8. The optical data writing method of claim 5 or 6, wherein each of the first and second sets of data is divided into a plurality of sectors, which are spaced apart from each other by linking areas of the same length, and
wherein a gap as long as one linking area is provided between the respective areas where the data representing the first content and the data representing the second content have been written.

9. The optical data writing method of one of claims 4 to 8, wherein the dummy data defines a phase-locking pattern.

10. The optical data writing method of claim 1, wherein the first or second set of data is written by irradiating the unrecorded area with light having erasing power.

11. A computer-readable storage medium having stored thereon a program that is defined so as to make a computer execute respective processing steps of the optical data writing method of one of claims 1 to 10.

12. An optical disk drive for writing user data optically on an optical disk by dividing the user data into a number of blocks, each being made up of a plurality of sectors, and adding an error correction code to each said block, the drive comprising:
a motor for rotating and driving the optical disk;
an optical head for irradiating the optical disk with a light beam to write data thereon;
a servo control section for controlling the rotational velocity of the motor and a spot made by the light beam; and
a light beam control section for controlling the intensity of the light beam,
wherein the servo control section and the light beam control section control the optical disk and the light beam so as to write a first set of data, including data representing a first content, on a track on the optical disk and then write a second set of data, including data representing a second content, onto the track such that an unrecorded area, where no data is stored, is left between respective areas where the first and second sets of data have been written.

13. The optical disk drive of claim 12, wherein the track on the optical disk includes no prepit areas defining addresses.

14. The optical disk drive of claim 12 or 13, wherein the unrecorded area is at least as long as one sector.

15. An optical disk, on a track of which user data has been written optically by dividing the user data into a number of blocks, each being made up of a plurality of sectors, and adding an error correction code to each said block, wherein an unrecorded area, where no data is stored, is provided between an area where a first set of data, including data representing a first content, is stored and an area where a second set of data, including data representing a second content, is written.

16. The optical disk of claim 15, wherein the track includes no prepit areas defining addresses.

17. The optical disk of claim 15 or 16, wherein the unrecorded area is at least as long as one sector.
